# FASCICULE DE BREVET EUROPEEN

(11) **EP 0 892 009 B1**
(45) Date de publication et mention de la délivrance du brevet: **04.12.2002**
(21) Numéro de dépôt: 98202267.5
(22) Date de dépôt: 04.07.1998
(51) Int. Cl.: C08K 3/34, C08L 23/04

(54) **Composition à base de polyéthylène et procédé de fabrication d'objets façonnés à partir de la composition**
Auf Polyethylene basierende Zusammensetzung sowie Verfahren zur Herstellung von Gegenständen aus dieser Zusammensetzung
Polyethylene based composition and process of making articles from this composition

(30) Priorité: 14.07.1997 BE 9700619
(43) Date de publication de la demande: 20.01.1999
(73) Titulaire: SOLVAY POLYOLEFINS EUROPE - BELGIUM (Société Anonyme), 1050 Bruxelles (BE)
(72) Inventeur: Scheelen, André, 1050 Bruxelles (BE); Coppens, Wim, 9080 Merelbeke (BE)
(74) Mandataire: Smith, Julian Philip Howard

(56) Documents cités:
- EP-A- 0 060 178
- EP-A- 0 278 470
- EP-A- 0 716 119
- WO-A-85/03194
- US-A- 5 049 441
- DATABASE WPI Section Ch, Week 9737 Derwent Publications Ltd., London, GB; Class A17, AN 97-399630 XP002059590 & JP 09 176328 A (TONEN CORP) , 8 juillet 1997

## Description

La présente invention concerne une composition à base de polyéthylène, un procédé de fabrication d'objets façonnés et les objets façonnés à partir de cette composition. Elle concerne plus particulièrement une composition à base de polyéthylène haute densité contenant de faibles quantités d'un additif minéral finement divisé et les objets façonnés à partir de cette composition, en particulier des tubes destinés au transport de fluides et, notamment, de fluides sous pression.

Il est connu d'améliorer les propriétés de glissement ("antiblocking") de films en polyéthylène de faible à moyenne densité par incorporation au polyéthylène de faibles quantités (environ 0,05 à 1% ) de matières inorganiques finement divisées, telles que le talc, le kaolin ou encore de la silice (brevet italien 719 725). Plus récemment, on a préconisé spécifiquement l'incorporation de 200 à 2500 ppm (0,02 à 0,25%) de talc pour améliorer les propriétés de glissement de films en polyéthylène ayant une masse volumique comprise entre 0,905 et 0,935 g/cm³ sans affecter notablement la transparence (brevet EP-B-60178).

Il est par ailleurs connu d'utiliser du polyéthylène et, en particulier du polyéthylène haute densité pour produire des tubes et des raccords pour le transport de fluides sous pression. Dans cette application, il est essentiel - pour des raisons évidentes de sécurité et de longévité des installations de transport des fluides - de disposer d'objets façonnés, tels que des tubes et des raccords, qui présentent une résistance très élevée à la pression hydrostatique.

La présente invention a pour but de procurer une composition à base de polyéthylène haute densité qui présente une résistance à la pression hydrostatique et, dès lors, une résistance au fluage nettement améliorées.

A cet effet, l'invention concerne une composition à base de polyéthylène selon la revendication 1.

Le talc utilisable dans les compositions selon l'invention peut être tout silicate de magnésium hydraté d'origine naturelle de formule générale 3MgO. 4SiO₂ .H₂O. Il peut contenir des quantités mineures d'oxydes métalliques tels que les oxydes d'aluminium, de fer et de calcium. Avantageusement, le talc a une texture essentiellement lamellaire. Sa répartition granulométrique se situe, de préférence, entre 0,2 et 15 microns et sa granulométrie moyenne entre 1 et 5 microns.

La présente invention résulte de la constatation surprenante que l'addition de faibles quantités de talc, inférieures à 1 partie en poids pour 100 parties en poids de polyéthylène haute densité, procure des compositions qui permettent la fabrication d'objets façonnés tels que des tubes dont la résistance au fluage est notablement améliorée sans affecter les autres propriétés mécaniques desdits objets façonnés, telles que la résistance à la propagation lente des fissures ("stress cracking" ou ESCR).

Des résultats intéressants sont déjà obtenus avec une quantité de talc aussi faible que 0,01 partie pour 100 parties en poids de polyéthylène. Le plus souvent, la quantité de talc sera au moins égale à 0,03 partie en poids. En général, elle ne dépassera pas 0,5 partie en poids. D'excellents résultats sont obtenus avec une quantité de talc comprise entre 0,05 et 0,25 partie pour 100 parties en poids de polyéthylène.

Par polyéthylène, on entend désigner aux fins de la présente invention aussi bien les homopolymères de l'éthylène que ses copolymères avec un ou plusieurs monomères et leurs mélanges. Parmi les comonomères utilisables, on peut mentionner les oléfines linéaires ou branchées contenant de 3 à 8 atomes de carbone, telles que par exemple le butène, l'hexène et le 4-méthylpentène, ainsi que les dioléfines comprenant de 4 à18 atomes de carbone, telles que le 4-vinylcyclohexène, le dicyclopentadiène, le 1,3-butadiène, etc. Les comonomères préférés sont le butène et l'hexène.

Généralement, la teneur totale en comonomère(s) du copolymère de l'éthylène s'élève à 0,01 % molaire au moins et le plus souvent à 0,05 % molaire au moins. La quantité totale de comonomère(s) ne dépasse habituellement pas 10 % molaire et le plus souvent 5 % molaire. On obtient de bons résultats avec des copolymères de l'éthylène contenant au total de 0,05 à 5 % molaire et plus particulièrement encore de 0,3 à 2 % molaire de butène et/ou d'hexène. A titre d'exemples non limitatifs de copolymères de l'éthylène avantageusement mis en oeuvre dans les compositions selon l'invention, on peut mentionner les co- et terpolymères statistiques de l'éthylène et de butène et/ou d'hexène ou encore les copolymères à distribution bimodale des masses moléculaires obtenus par polymérisation séquencée de mélanges d'éthylène et de butène et/ou d'hexène. Les copolymères à distribution bimodale obtenus par polymérisation séquencée d'éthylène et d'un mélange d'éthylène et de butène conviennent particulièrement bien.

Avantageusement, on utilise du polyéthylène dont la masse volumique standard telle que définie plus haut est au moins égale à 943 kg/m³ et plus particulièrement encore à 946 kg/m³. En général, la masse volumique standard ne dépasse pas 960 kg/m³ et plus particulièrement encore 955 kg/m³.

Le plus souvent, le polyéthylène mis en oeuvre dans la composition selon l'invention est en outre caractérisé par un indice de fluidité, mesuré à 190°C, sous une charge de 5 kg selon la norme ISO 1133 (1991) d'au moins 0,07g/10min, les valeurs d'au moins 0,1g/10 min étant les plus courantes. L'indice de fluidité ne dépasse en général pas 5g/10 min et le plus souvent pas 2g/10min.

Outre le talc, la composition selon la présente invention peut comprendre des additifs usuels des polymères d'éthylène, tels que des stabilisants (par exemple des anti-acides, des anti-oxydants et/ou des anti-UV) et des agents de mise en oeuvre ("processing aid"). La teneur de la composition en chacun dé ces additifs est généralement inférieure à 1 %, de préférence inférieure à 0,5 %, en poids. La composition selon l'invention peut également comprendre des pigments. Le plus souvent, la teneur en pigments ne dépasse pas 5 % en poids de la composition et, plus particulièrement encore 3 % en poids.

La composition selon l'invention comprend généralement au moins 94 %, de préférence au moins 96 % en poids de polyéthylène.

Le mode de préparation de la composition selon l'invention n'est pas critique. Celle-ci peut être obtenue par tout moyen connu adéquat. On peut, par exemple, incorporer le talc au polyéthylène en même temps que les additifs usuels à l'état de mélange en poudre. Une méthode alternative préférée consiste à mélanger le polyéthylène avec le talc et les additifs usuels à température ambiante, et ensuite à les mélanger à une température supérieure à la température de fusion du polyéthylène, par exemple dans un mélangeur mécanique ou une extrudeuse. On peut aussi, dans un premier temps, préparer un mélange-maître comprenant une première fraction de polyéthylène, le talc et les additifs usuels tels que définis ci-dessus, ce mélange-maître étant riche en talc. La teneur en talc de ce mélange-maître est en général de 0,5 à 5 % en poids, de préférence de 0,5 à 2 % en poids et, plus particulièrement de 0,75 à 1,5 % en poids. Ce mélange-maître est ensuite mélangé à la fraction restante de polyéthylène. Ces méthodes permettent d'obtenir la composition sous la forme d'une poudre que l'on peut éventuellement soumettre ensuite à une granulation pour obtenir la composition à l'état de granules. De manière connue, ces granules sont obtenus par extrusion de la composition en coupant le jonc sortant de l'extrudeuse en granules. Le procédé de granulation peut être effectué en alimentant une extrudeuse en un mélange préalablement préparé de polyéthylène avec le talc (et éventuellement les additifs usuels) et en recueillant des granules à la sortie de l'installation. Une variante du procédé de granulation consiste à introduire un mélange-maître tel que décrit ci-dessus et la fraction restante de polyéthylène dans l'extrudeuse.

La préférence est donnée aux compositions qui se trouvent à l'état de granules extrudés.

La composition selon l'invention présente généralement une masse volumique standard (mesurée tel que défini ci-dessus) supérieure à 940 kg/m³ et, le plus souvent, au moins égale à 945 kg/m³ et plus particulièrement encore à 947 kg/m³. En général, la masse volumique standard de la composition ne dépasse pas 970 kg/m³ et plus particulièrement 965 kg/m³.

La composition selon l'invention présente habituellement un indice de fluidité, mesuré à 190°C, sous une charge de 5 kg selon la norme ISO 1133 (1991) d'au moins 0,07 g/10min, les valeurs d'au moins 0,1 g/10 min étant les plus courantes. L'indice de fluidité ne dépasse en général pas 5 g/10 min et le plus souvent pas 2 g/10min.

La composition selon l'invention conduit par mise en oeuvre à l'état fondu à des objets façonnés qui présentent une résistance au fluage très nettement améliorée, par comparaison avec des compositions identiques ne contenant pas de talc.

La composition selon l'invention peut être mise en oeuvre selon tous les procédés classiques de fabrication d'objets façonnés en polyéthylène, tels que les procédés d'extrusion, d'extrusion-soufflage, d'extrusion-thermoformage et d'injection. Elle convient bien pour l'injection de raccords pour tubes. Elle convient tout particulièrement bien pour l'extrusion de tubes, en particulier de tubes destinés au transport de fluides sous pression, tels que de l'eau et du gaz.

La présente invention concerne dès lors également un procédé de fabrication d'objets façonnés à partir de la composition selon l'invention. L'invention concerne en particulier un procédé de fabrication de raccords pour tubes par injection d'une composition selon l'invention. L'injection de la composition selon l'invention s'effectue dans les installations et dans les conditions d'injection usuelles des compositions à base de polymères d'éthylène à des températures situées, de préférence aux environs de 240 à 280 °C. L'invention concerne également un procédé pour l'extrusion de tubes, notamment de tubes destinés au transport de fluides, en particulier des fluides sous pression. L'extrusion de la composition selon l'invention, se trouvant de préférence à l'état de granules extrudés, s'effectue dans les installations et dans les conditions d'extrusion usuelles des compositions à base de polymères d'éthylène bien connues de l'homme du métier à des températures situées aux environs de 185 à 210°C.

L'invention concerne également les objets façonnés à partir de la composition selon l'invention et, en particulier les raccords pour tubes obtenus par injection de la composition et les tubes obtenus par extrusion de la composition. L'invention concerne plus particulièrement les tubes destinés au transport de fluides notamment de fluides sous pression, façonnés par l'extrusion de la composition selon l'invention. Outre une résistance à la pression hydrostatique, c'est-à-dire une tenue au fluage, nettement améliorée, les tubes fabriqués au moyen de la composition selon l'invention présentent une très bonne résistance à la fissuration lente (stress-cracking).

L'exemple qui suit est destiné à illustrer l'invention. La signification des symboles utilisés dans cet exemple (ainsi que dans l'exemple de référence), les unités exprimant les grandeurs mentionnées et les méthodes de mesures de ces grandeurs sont explicitées ci-dessous.
- MVS =: masse volumique standard mesurée à 23°C selon la norme ASTM D 792.
- MI₅ =: indice de fluidité, mesuré à 190°C, sous une charge de 5 kg selon la norme ISO 1133 (1991).
- t =: résistance au fluage exprimée en terme de temps à la rupture, mesurée selon la norme ISO 1167 (1996), à 20°C sur un tube ayant un diamètre de 50 mm et une épaisseur de 3 mm et sous une contrainte circonférentielle de 12,4 MPa.
- ESCR =: résistance à la propagation lente de fissures, exprimée en terme de temps à la rupture, mesurée sur un tube entaillé selon la méthode décrite dans la norme ISO F/DIS 13479 (1996), à 80 °C sur un tube ayant un diamètre de 110 mm et une épaisseur de 10 mm et sous une contrainte de 4,6 MPa.
- RCP =: résistance à la propagation rapide de fissures, mesurée à une température de -15°C selon la méthode S4 décrite dans norme ISO F/DIS 13477(1996) sur un tube ayant un diamètre de 110 mm et une épaisseur de 10 mm.

### Exemple 1

Une composition a été préparée comprenant, par kg de composition, les ingrédients suivants :
- 989,9 g d'un copolymère de l'éthylène comprenant une distribution bimodale de masse moléculaire, ayant un MI₅ de 0,45 g/10 min et une MVS de 948,5 kg/m³. Ce copolymère comprend 50 % en poids d'un homopolymère de l'éthylène et 50 % en poids d'un copolymère de l'éthylène et du butène comprenant 1 % molaire d'unités monomériques dérivées du 1-butène,
- 4,6 g d'un mélange de pigments bleu, noir et blanc,
- 2,5 g d'un agent anti-oxydant,
- 1 g de stéarate de calcium,
- 1 g d'un agent anti-UV, et
- 1 g de talc de qualité STEAMIC®00S (LUZENAC). Ce talc présente une structure lamellaire. Il est constitué de particules dont le diamètre varie de 0,3 à 10 µm, la granulométrie moyenne étant de 1,8 µm.

Cette composition a été granulée à une température de 210°C sur une extrudeuse-granulatrice ZSK 40 (commercialisé par la société Werner & Pfleiderer). Les granules obtenus présentaient un MI₅ de 0,44 g/10 min et une MVS de 951,9 kg/m³.

Puis des tubes ont été fabriqués par extrusion de ces granules sur une extrudeuse de type monovis (type Battenfeld) à 190°C.

Les propriétés mécaniques mesurées sur ces tubes sont présentées dans le tableau I.

### Exemple comparatif

Une composition identique à celle de l'exemple 1 a été préparée sauf qu'elle ne comprenait pas de talc. Cette composition a été granulée et des tubes ont été fabriqués dans les mêmes conditions que dans l'exemple 1. Les granules présentaient un MI₅ de 0,43 g/10 min et une MVS de 951,4 kg/m³.

Les propriétés mécaniques mesurées sur ces tubes sont présentées dans le tableau I.

**Tableau I**

| | Exemple 1 | Exemple comparatif (composition sans talc) |
|---|---|---|
| t (heures) | 342 | 134 |
| ESCR (heures) | > 2500 | > 2500 |
| RCP (bar) | 2 à 3 | 2 à 3 |

Ces essais montrent que la composition de l'exemple 1 comprenant une faible quantité de talc permet d'obtenir des tubes ayant une résistance à la pression hydrostatique (résistance au fluage) nettement améliorée par rapport à une composition identique ne comprenant pas de talc.

## Revendications

1. Composition à base de polyéthylène choisi parmi les homopolymères de l'éthylène et ses copolymères dont la quantité totale en comonomère(s) ne dépasse pas 10 % molaire, **caractérisée en ce que** le polyéthylène présente une masse volumique standard mesurée à 23°C selon la norme ASTM D 972 supérieure à 940 kg/m³ et **en ce qu'**il comprend du talc en une quantité inférieure à 1 partie pour 100 parties en poids de polyéthylène.

2. Composition à base de polyéthylène selon la revendication 1, **caractérisée en ce que** le talc présente une texture essentiellement lamellaire.

3. Composition à base de polyéthylène selon les revendications 1 ou 2, **caractérisée en ce que** le talc présente une répartition granulométrique située entre 0,2 et 15 microns et une granulométrie moyenne entre 1 et 5 microns.

4. Composition à base de polyéthylène selon l'une quelconque des revendications 1 à 3, **caractérisée en ce que** la quantité de talc est comprise entre 0,05 et 0,25 partie pour 100 parties en poids de polyéthylène.

5. Composition à base de polyéthylène selon l'une quelconque des revendications 1 à 4, **caractérisée en ce que** le polyéthylène est choisi parmi les homopolymères et les copolymères de l'éthylène contenant au total de 0,01 à 10 % molaire de comonomères présentant une masse volumique standard supérieure à 943 kg/m³ et ne dépassant pas 960 kg/m³ et un indice de fluidité, mesuré à 190°C sous une charge de 5 kg selon la norme ISO 1133 (1991) de 0,07 à 5 g/10min.

6. Composition à base de polyéthylène selon la revendication 5, **caractérisée en ce que** le polyéthylène est choisi parmi les copolymères de l'éthylène contenant au total de 0,05 à 5 % molaire de butène et/ou d'hexène.

7. Composition à base de polyéthylène selon l'une quelconque des revendications 1 à 6, **caractérisée en ce qu'**elle se trouve à l'état de granules extrudés.

8. Procédé de fabrication d'objets façonnés à partir de la composition conforme à l'une quelconque des revendications 1 à 7.

9. Procédé de fabrication d'objets façonnés selon la revendication 8, **caractérisé en ce qu'**il est appliqué à l'extrusion de tubes, en particulier des tubes destinés au transport de fluides sous pression, ou à l'injection de raccords pour tubes.

10. Tubes façonnés par extrusion d'une composition selon l'une quelconque des revendications 1 à 7.

11. Raccords pour tubes façonnés par injection d'une composition selon l'une quelconque des revendications 1 à 7.

## Claims

1. Polyethylene-based composition chosen from ethylene homopolymers and ethylene copolymers, the total amount of comonomer(s) of which does not exceed 10 mol%, **characterized in that** the polyethylene has a standard density measured at 23°C according to ASTM D 972 Standard of greater than 940 kg/m³, and **in that** it includes talc in an amount of less than 1 part per 100 parts by weight of polyethylene.

2. Polyethylene-based composition according to Claim 1, **characterized in that** the talc has an essentially lamellar texture.

3. Polyethylene-based composition according to either of Claims I and 2, **characterized in that** the talc has a particle size distribution ranging between 0.2 and 15 microns and a mean particle size of between 1 and 5 microns.

4. Polyethylene-based composition according to any one of Claims 1 to 3, **characterized in that** the amount of talc is between 0.05 and 0.25 parts per 100 parts by weight of polyethylene.

5. Polyethylene-based composition according to any one of Claims 1 to 4, **characterized in that** the polyethylene is chosen from ethylene homopolymers and ethylene copolymers containing in total from 0.01 to 10 mol% of comonomers, having a standard density of greater than 943 kg/m³ and not exceeding 960 kg/m³ and a melt flow index, measured at 190°C under a load of 5 kg according to the ISO 1133 (1991) Standard, of 0.07 to 5 g/10 min.

6. Polyethylene-based composition according to Claim 5, **characterized in that** the polyethylene is chosen from ethylene copolymers containing in total from 0.05 to 5 mol% butene and/or hexene.

7. Polyethylene-based composition according to any one of Claims 1 to 6, **characterized in that** it is in the state of extruded granules.

8. Process for manufacturing articles fashioned from the composition according to any one of Claims 1 to 7.

9. Process for manufacturing articles fashioned according to Claim 8, **characterized in that** it is applied to the extrusion of pipes, in particular pipes intended for transporting pressurized fluids, or to the injection moulding of couplings for pipes.

10. Pipes fashioned by extruding a composition according to any one of Claims 1 to 7.

11. Couplings for pipes, fashioned by injection moulding a composition according to any one of Claims 1 to 7.

## Patentansprüche

1. Zusammensetzung auf der Basis von Polyethylen, ausgewählt unter den Homopolymeren des Ethylens und seinen Copolymeren, deren Gesamtmenge an Comonomer(en) 10 Mol-% nicht übersteigt, **dadurch gekennzeichnet, dass** das Polyethylen eine bei 23°C gemäß der Norm ASTM D 972 gemessene Standarddichte von höher als 940 kg/m³ aufweist, und dadurch, dass es Talk in einer Menge von weniger als 1 Gew.-Teil auf 100 Gew.-Teile Polyethylen umfasst.

2. Zusammensetzung auf der Basis von Polyethylen gemäß Anspruch 1, **dadurch gekennzeichnet, dass** der Talk eine im Wesentlichen plättchenförmige Struktur aufweist.

3. Zusammensetzung auf der Basis von Polyethylen gemäß den Ansprüchen 1 oder 2, **dadurch gekennzeichnet, dass** der Talk eine Korngrößenverteilung zwischen 0,2 und 15 Mikrometern und eine mittlere Korngröße zwischen 1 und 5 Mikrometern aufweist.

4. Zusammensetzung auf der Basis von Polyethylen gemäß einem der Ansprüche 1 bis 3, **dadurch gekennzeichnet, dass** die Menge an Talk zwischen 0,05 und 0,25 Gew.-Teilen auf 100 Gew.-Teile Polyethylen liegt.

5. Zusammensetzung auf der Basis von Polyethylen gemäß einem der Ansprüche 1 bis 4, **dadurch gekennzeichnet, dass** das Polyethylen ausgewählt ist unter den Homopolymeren und den Copolymeren des Ethylens mit insgesamt 0,01 bis 10 Mol-% Comonomeren, aufweisend eine Standarddichte, die höher als 943 kg/m³ ist und 960 kg/m³ nicht übersteigt, und einen Schmelzindex, gemessen bei 190°C unter einer Last von 5 kg gemäß der Norm ISO 1133 (1991), von 0,07 bis 5 g/10 min.

6. Zusammensetzung auf der Basis von Polyethylen gemäß Anspruch 5, **dadurch gekennzeichnet, dass** das Polyethylen ausgewählt ist unter den Ethylencopolymeren mit insgesamt 0,05 bis 5 Mol-% Buten und/oder Hexen.

7. Zusammensetzung auf der Basis von Polyethylen gemäß einem der Ansprüche 1 bis 6, **dadurch gekennzeichnet, dass** sie sich im Zustand von extrudiertem Granulat befindet.

8. Verfahren zur Herstellung von Formteilen aus der Zusammensetzung gemäß einem der Ansprüche 1 bis 7.

9. Verfahren zur Herstellung von Formteilen gemäß Anspruch 8, **dadurch gekennzeichnet, dass** es angewandt wird für die Extrusion von Rohren, insbesondere Rohren, die bestimmt sind für den Transport von Flüssigkeiten unter Druck, oder für das Spritzen von Verbindungsstücken für Rohre.

10. Rohre, geformt durch Extrusion einer Zusammensetzung gemäß einem der Ansprüche 1 bis 7.

11. Verbindungsstücke für Rohre, geformt durch Spritzen einer Zusammensetzung gemäß einem der Ansprüche 1 bis 7.
